# EUROPEAN PATENT APPLICATION

(11) **EP 4 765 945 A1**
(43) Date of publication of application: **24.06.2026**
(21) Application number: 24854105.4
(22) Date of filing: 19.07.2024
(51) Int. Cl.: H04W 28/24, H04W 84/12

(54) **INFORMATION PROCESSING DEVICE, INFORMATION PROCESSING METHOD, AND COMPUTER PROGRAM**

(30) Priority: 16.08.2023 JP 2023132672
(71) Applicant: Sony Group Corporation, Tokyo 108-0075 (JP)
(72) Inventor: AIO Kosuke, Tokyo 108-0075 (JP); SUGAYA Shigeru, Tokyo 108-0075 (JP)
(74) Representative: D Young & Co LLP
(86) International application number: PCT/JP2024/025898
(87) International publication number: WO 2025/037514

(57) **Abstract**

[Object] To realize appropriate QoS control in transmission of multiple types of data.

[Solving Means] An information processing apparatus according to the present disclosure includes a control unit that controls a communication unit that communicates with a wireless communication device. The control unit performs control to receive, via the communication unit, a first traffic flow in which multiple types of data are arranged in a first order, the first traffic flow being transmitted from the wireless communication device, and to transmit, to the wireless communication device and via the communication unit, a traffic parameter that is related to the first order and specified on the basis of the received first traffic flow.

## Description

### Technical Field

The present disclosure relates to an information processing apparatus, an information processing method, and a computer program.

### Background Art

In recent years, expectations for next-generation applications such as VR (Virtual Reality)/AR (Augmented Reality)/XR (Extended Reality/Cross Reality) have been increasing year by year. Currently, the most common use case involves a method of connecting a video information generating device called a console, and a device which displays the video information (HMD: Head Mount Display) by wires, but wireless kit products that do not require wired cables between the console and the HMD have also been commercialized. It is predicted that the transition to fully wireless communication between the two will accelerate in the future. Furthermore, systems in which a server that performs rendering is present in the local network or on the cloud side, and the generated video information is transmitted to the HMD via a wireless LAN (Local Area Network) access point (AP: Access Point) device are also expected to become more common in the future.

MPEG (Moving Picture Experts Group) that is popular as a video information standard uses a GoP (Group Of Structure) technique for generating multiple frame types with different data sizes and priorities on the basis of a compression method. There is a fear that if an I frame that can be decoded in frame units becomes lost out of the frame types used in GoP, it will become impossible to display a picture on the HMD side even if subsequent frames are acquired. For this reason, the I frame is considered to be a frame that needs to be transmitted with the highest priority, even within the traffic of the same application.

Non-Patent Literature 1 discusses a method of preventing a packet loss from occurring by allocating an I frame to a stream with higher communication quality. Specifically, a method of identifying I/P/B frames and allocating appropriate MIMO streams to the I/P/B frames is presented. However, the essential identification method is not described, and adopting this technique requires a modification of an upper layer standard to no small extent.

Further, Non-Patent Literature 2 proposes a technique in which a cross layer configuration is adopted, and a setting of the number of retransmissions and/or a channel access priority are determined for each frame type. In the cross layer as in Non-Patent Literature 2, an implementation difficulty is high, and the cross layer configuration has poor compatibility with an access point device that operates as an L3 (Layer) or L2 (Layer 2) router.

### Citation List

### Non-Patent Literature

Non-Patent Literature 1: IEEE 802.11-22/1930r0, "Layered QoS and multi-layer transmission"
Non-Patent Literature 2: Y. Xiao, Y. Zhang, M. Nolen, J. H. Deng and J. Zhang, "A Cross-Layer Approach for Prioritized Frame Transmissions of MPEG-4 Over the IEEE 802.11 and IEEE 802.11e Wireless Local Area Networks", in IEEE Systems Journal, vol. 5, no. 4, pp. 474-485, Dec. 2011, doi: 10.1109/JSYST.2011.2165596.

### Disclosure of Invention

### Technical Problem

The present disclosure realizes appropriate QoS control in transmission of multiple types of data.

### Solution to Problem

An information processing apparatus according to the present disclosure includes a control unit that controls a communication unit that communicates with a wireless communication device. The control unit performs control to receive, via the communication unit, a first traffic flow in which multiple types of data are arranged in a first order, the first traffic flow being transmitted from the wireless communication device, and to transmit, to the wireless communication device and via the communication unit, a traffic parameter that is related to the first order and specified on the basis of the received first traffic flow.

### Brief Description of Drawings

[Fig. 1] Fig. 1 shows an example of a system configuration according to the present disclosure.
[Fig. 2] Fig. 2 is a block diagram of an AP according to the present disclosure.
[Fig. 3] Fig. 3 is a block diagram of an STA according to the present disclosure.
[Fig. 4] Fig. 4 shows an example of a GOP structure as an example of an MPEG frame structure.
[Fig. 5] Fig. 5 is a diagram of a sequence of overall operations performed between the AP and the STA.
[Fig. 6] Fig. 6 shows a configuration example of Capability Element.
[Fig. 7] Fig. 7 shows a configuration example of QoS Characteristic Element.
[Fig. 8] Fig. 8 shows a configuration example of Control Info included in QoS Characteristic Element.
[Fig. 9] Fig. 9 shows a format example of Segmentation Condition Field.
[Fig. 10] Fig. 10 shows specific examples of values of Segmented Traffic Flow Set Number and Segmented Traffic Flow Bitmap.
[Fig. 11] Fig. 11 is a flowchart of an example of operations of the STA.
[Fig. 12] Fig. 12 is a flowchart of an example of operations of the AP.
[Fig. 13] Fig. 13 shows a configuration example of TWT Element according to the present disclosure.
[Fig. 14] Fig. 14 shows an example of an R-TWT execution sequence according to the present disclosure.
[Fig. 15] Fig. 15 shows another example of Segmentation Condition Field according to the present disclosure.
[Fig. 16] Fig. 16 is a block diagram of an AP having a multi-link configuration.
[Fig. 17] Fig. 17 is a block diagram of an STA having a multi-link configuration.
[Fig. 18] Fig. 18 is a block diagram showing a hardware configuration example of a computer that executes the series of processing described above according to a program.
[Fig. 19] Fig. 19 is a block diagram showing a schematic configuration example of a smartphone to which the present technology is applied.
[Fig. 20] Fig. 20 is a block diagram showing an example of a schematic configuration of an in-vehicle device to which the present technology is applied.
[Fig. 21] Fig. 21 is a block diagram showing an example of a schematic configuration of a wireless AP to which the present technology is applied.

### Modes for Carrying Out the Invention

Hereinafter, an embodiment according to the present disclosure will be described with reference to the drawings.

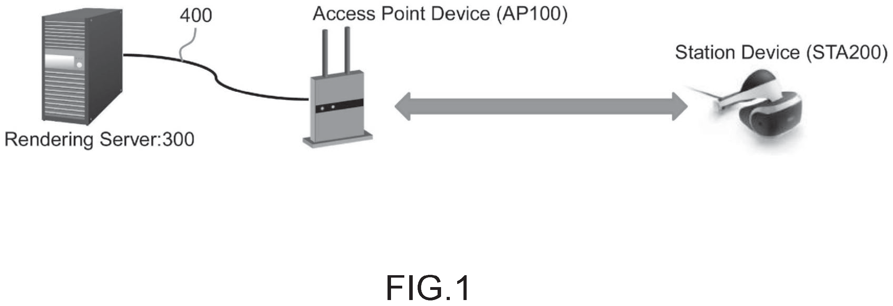

Fig. 1 shows an example of a system configuration according to the present disclosure.

The system shown in Fig. 1 includes one AP device (Access Point or base station) 100 and one STA device (STAtion, child device or terminal device) 200. The present system further includes a rendering server 300 (data generation device) connected to the AP device 100 via a wired backhaul network (communications network) 400. Hereinafter, the AP device 100 will be referred to as AP 100, and the STA device 200 will be referred to as STA 200.

The STA 200 is wirelessly connected to the AP 100, and a BSS (Basic Service Set) is formed between the STA 200 and the AP 100 for wirelessly exchanging information. Here, the STA 200 is a device (commonly known as a Head Mount Display: HMD) that executes VR/AR/XR applications. However, the present disclosure is not limited to the system configuration shown in Fig. 1. For example, the STA 200 is not limited to the HMD, and may be a general communication device such as a smartphone, for example, as long as it is a device that includes a display that receives and displays data generated by the rendering server 300. Further, the number of STAs may be two or more. The rendering server 300 may be arranged on the cloud side. Furthermore, the backhaul network 400 may be a wireless backhaul network.

### (Configuration of AP 100)

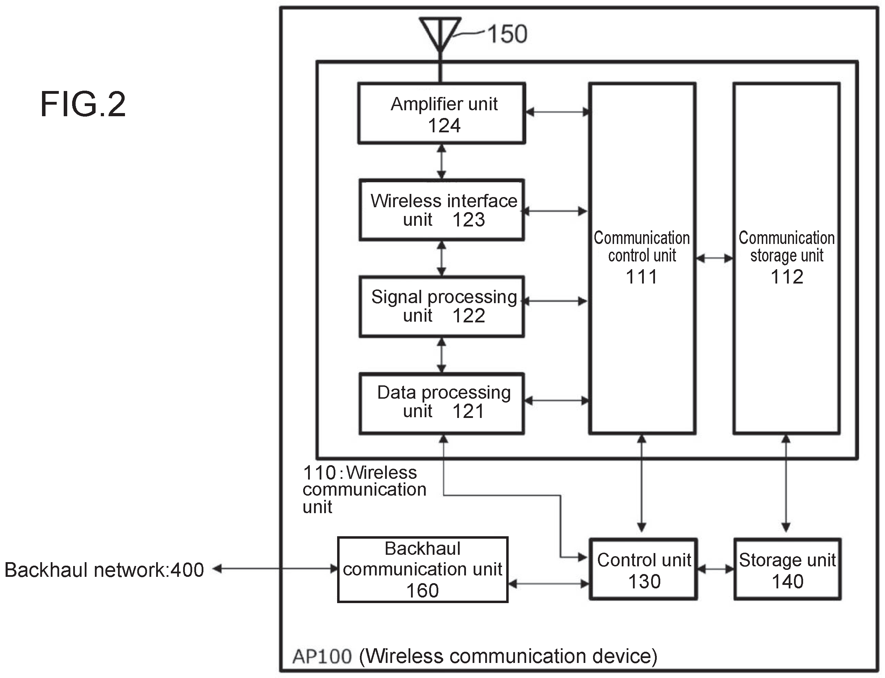

Fig. 2 is a block diagram of the AP 100 in the information processing apparatus according to the present disclosure. The AP 100 mainly includes a wireless communication unit 110, a control unit 130, a storage unit 140, an antenna 150, and a backhaul communication unit 160. It is noted that for operations other than the operations described in the present embodiment, the AP 100 performs operations based on CSMA/CA (Carrier Sense Multiple Access with Carrier Avoidance), as a wireless LAN base station conforming to the IEEE 802.11 standard such as IEEE 802.11a/b/g/n/ac/ax/be/bn. The information processing apparatus according to the present disclosure may include constituent elements other than those of the configuration shown in Fig. 2, such as a display unit and a user operation unit.

The wireless communication unit 110 performs wireless communication with the STA which is another wireless communication device (a device including a wireless communication unit) connected thereto. The wireless communication unit 110 includes a communication control unit 111, a communication storage unit 112, a data processing unit 121, a signal processing unit 122, a wireless interface unit 123, and an amplifier unit 124. The communication unit of the AP according to the present embodiment at least partially includes the functions performed by at least one of the wireless communication unit 110 or the backhaul communication unit 160.

The communication control unit 111 performs control of the operations of the respective units and transmission of information among the respective units. The communication control unit 111 also hands over control information and management information to be notified to the other wireless communication devices to the data processing unit 121.

The communication storage unit 112 retains information to be used by the communication control unit 111. The communication storage unit 112 also retains data to be transmitted and received data. A transmission buffer for retaining the data to be transmitted is included in the communication storage unit 112.

During transmission, the data processing unit 121 performs a sequence management of information to be transmitted. The information to be transmitted includes data retained in the communication storage unit 112 and control information and management information received from the communication control unit 111. The data processing unit 121 performs encryption processing and/or the like on the information to be transmitted, then adds a MAC (Media Access Control) header and an error detection code to generate a MAC frame (hereinafter, will be referred to as frame). The data processing unit 121 may also perform processing of concatenating a plurality of frames. During reception, the data processing unit 121 performs MAC header concatenation cancel processing, analysis, and error detection of the received frame. The data processing unit 121 also performs reorder processing in response to a retransmission request. The frame type may be any of a data frame, a management frame, and a control frame.

During transmission, the signal processing unit 122 performs encoding, interleaving, modulation, and the like on the frame, and adds a physical header to generate a symbol stream. During reception, the signal processing unit 122 analyzes the physical header and performs demodulation, deinterleaving, decoding, and the like on the symbol stream to generate a frame. The signal processing unit 122 also performs an estimation of complex channel characteristics and spatial separation processing as necessary.

During transmission, the wireless interface unit 123 performs digital-to-analog signal conversion, filtering, up-conversion, and phase control on the symbol stream to generate a transmission signal. During reception, the wireless interface unit 123 performs down-conversion, filtering, and analog-to-digital signal conversion on the received signal to generate a symbol stream.

The amplifier unit 124 amplifies a signal input from the wireless interface unit 123 or the antenna 150. A part of the amplifier unit 124 may be a constituent element outside the communication unit. Alternatively, a part of the amplifier unit 124 may be included in the wireless interface unit 123.

Although Fig. 2 shows the configuration example of SISO (Single-Input Single-Output) in which one set of the amplifier unit 124 and the antenna 150 is provided, a configuration that enables MIMO (Multi-Input Multi-Output) transmission and reception processing by using a plurality of sets of the antenna 150 and the amplifier unit 124 is also possible. Alternatively, a configuration including a plurality of sets of the wireless interface unit, the signal processing unit, the data processing unit, and the like so as to enable a plurality of links (multi-link) or a plurality of frequency channels to be operated in parallel is also possible.

It is noted that although the wireless communication unit 110 is assumed to be configured by a single IC, the IC configuration is not limited to this. For example, the wireless interface unit may be configured as a separate IC.

The control unit 130 controls the wireless communication unit 110 and the communication control unit 111. The control unit 130 may also perform some of the operations of the communication control unit 111 in place of the communication control unit 111. Further, the communication control unit 111 and the control unit 130 may be configured as a single block. The control unit 130 may alternatively be configured by a processor such as a CPU (Central Processing Unit) included in a computer.

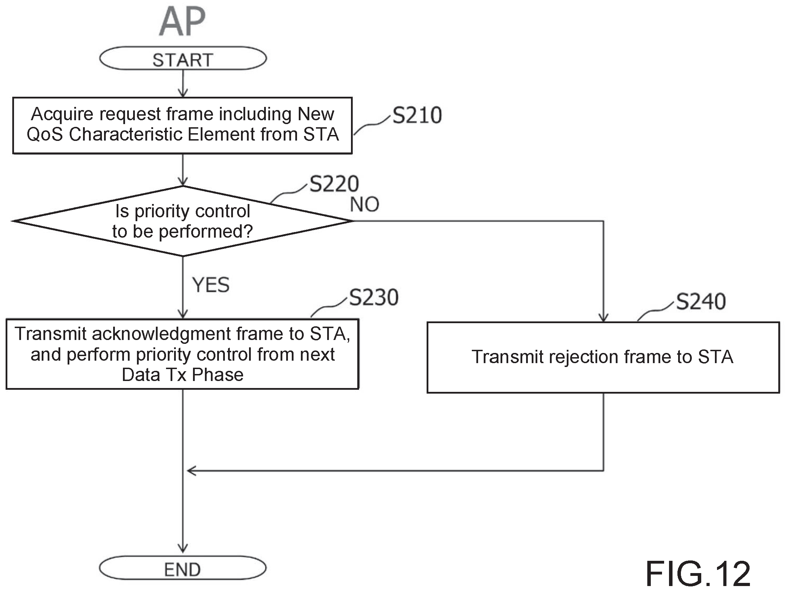

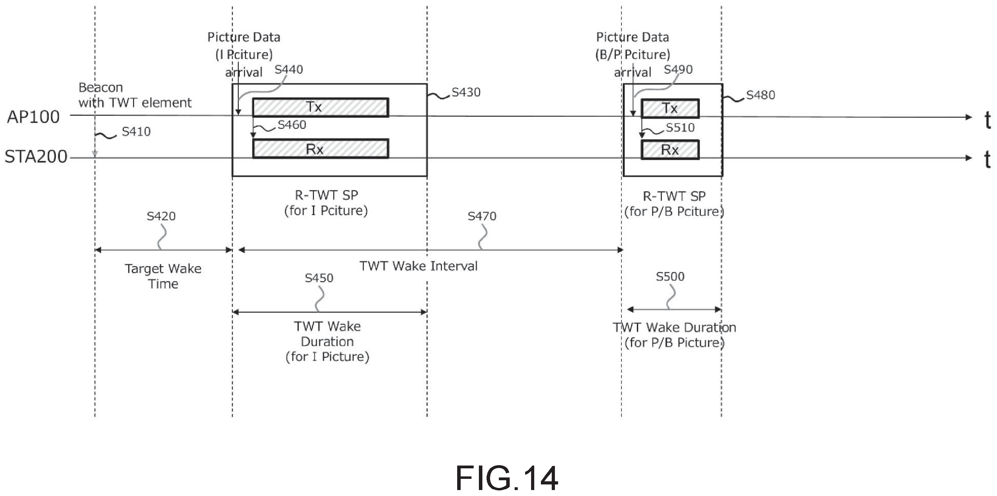

The control unit according to the present embodiment at least partially includes the functions of at least one of the communication control unit 111 or the control unit 130. The control unit performs control to transmit a first traffic flow in which multiple types of data (e.g., I/P/B frames received from the rendering server 300) are arranged in a first order to the STA via the communication unit, to receive a traffic parameter related to the first order from the STA via the communication unit, and to transmit a second traffic flow in which the multiple types of data are arranged in the first order on the basis of the traffic parameter. The traffic parameter includes a parameter related to at least one priority control of the multiple types of data, and a target type of data is identified by a position of data in the first order and a cycle of arrival of the data. In accordance with the position of the target type of data, the control unit performs priority control with respect to the data in the second traffic flow. The control unit does not need to recognize the type of data to be transmitted and only needs to know the position of the data to become a target of the priority control (the position in the traffic flow). Details of control by the control unit will be described later in the sequence (Fig. 14) and operation flow (see Fig. 12) of the present disclosure.

The storage unit 140 retains information to be used by the control unit 130 and the wireless communication unit 110. The storage unit 140 may also perform some of the operations of the communication storage unit 112 in place of the communication storage unit 112. The storage unit 140 and the communication storage unit 112 may be configured as a single block.

The backhaul communication unit 160 communicates with other devices via a backhaul network that is a wired or wireless communication network. The other devices include the rendering server 300. The backhaul communication unit 160 decodes a packet acquired from the backhaul network and hands over the decoded packet to the wireless communication unit 110 via the control unit 130. A format of the packet that is handed over herein may be one in which the IP header remains intact (access point mode) or one in which the IP header has been decoded and removed by the backhaul communication unit 160 (router mode). In the present embodiment, communication with the rendering server 300 is performed via the backhaul communication unit 160, but communication via the wireless communication unit 110 is also possible.

### (Configuration of STA 200)

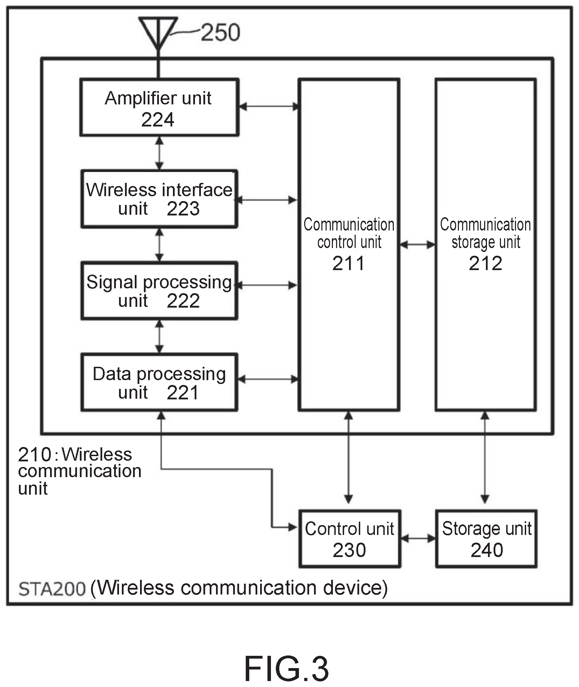

Fig. 3 is a block diagram of the STA 200 in the information processing apparatus according to the present disclosure. The STA 200 mainly includes a wireless communication unit 210, a control unit 230, a storage unit 240, and an antenna 250. For operations other than the operations described in the present embodiment, the STA 200 also performs operations as a wireless LAN station conforming to the IEEE 802.11 standard such as IEEE 802.11a/b/g/n/ac/ax/be/bn. For example, the STA 200 may perform operations based on CSMA/CA (Carrier Sense Multiple Access with Carrier Avoidance). The information processing apparatus according to the present disclosure may include constituent elements other than those of the configuration shown in Fig. 3, such as a display unit and a user operation unit.

The wireless communication unit 210 performs processing for performing wireless communication with the AP 100 or other STAs, where the AP 100 and the other STAs are other wireless communication devices (devices each including a wireless communication unit) connected thereto. The wireless communication unit 210 includes a communication control unit 211, a communication storage unit 212, a data processing unit 221, a signal processing unit 222, a wireless interface unit 223, and an amplifier unit 224.

The communication control unit 211 performs control of the operations of the respective units and transmission of information among the respective units. The communication control unit 211 also hands over control information and management information to be notified to the other wireless communication devices to the data processing unit 221.

The communication storage unit 212 retains information to be used by the communication control unit 211. The communication storage unit 212 also retains data to be transmitted and received data. A transmission buffer for retaining the data to be transmitted is included in the communication storage unit 212.

During transmission, the data processing unit 221 performs a sequence management of information to be transmitted. The information to be transmitted includes data retained in the communication storage unit 212 and control information and management information received from the communication control unit 211. The data processing unit 221 performs encryption processing and/or the like on the information to be transmitted, then adds a MAC (Media Access Control) header and an error detection code to generate a MAC frame (hereinafter, will be referred to as frame). The data processing unit 221 may also perform processing of concatenating a plurality of frames. During reception, the data processing unit 221 performs MAC header concatenation cancel processing, analysis, and error detection of the received frame. The data processing unit 221 also performs reorder processing in response to a retransmission request. The frame type may be any of a data frame, a management frame, and a control frame.

During transmission, the signal processing unit 222 performs encoding, interleaving, modulation, and the like on the frame, and adds a physical header to generate a symbol stream. During reception, the signal processing unit 222 analyzes the physical header and performs demodulation, deinterleaving, decoding, and the like on the symbol stream to generate a frame. The signal processing unit 222 also performs an estimation of complex channel characteristics and spatial separation processing as necessary.

During transmission, the wireless interface unit 223 performs digital-to-analog signal conversion, filtering, up-conversion, and phase control on the symbol stream to generate a transmission signal. During reception, the wireless interface unit 223 performs down-conversion, filtering, and analog-to-digital signal conversion on the received signal to generate a symbol stream.

The amplifier unit 224 amplifies a signal input from the wireless interface unit 223 or the antenna 250. A part of the amplifier unit 224 may be a constituent element outside the communication unit. Alternatively, a part of the amplifier unit 224 may be included in the wireless interface unit 223.

Although Fig. 3 shows the configuration example of SISO in which one set of the amplifier unit 224 and the antenna 250 is provided, a configuration that enables MIMO transmission and reception processing by using a plurality of sets of the antenna 250 and the amplifier unit 224 is also possible. Moreover, a configuration including a plurality of sets of the wireless interface unit, the signal processing unit, the data processing unit, and the like so as to enable a plurality of links (multi-link) or a plurality of frequency channels to be operated in parallel is also possible.

It is noted that although the wireless communication unit 210 is assumed to be configured by a single IC, the IC configuration is not limited to this. For example, the wireless interface unit may be configured as a separate IC.

The control unit 230 controls the wireless communication unit 210 and the communication control unit 211. The control unit 230 may also perform some of the operations of the communication control unit 211 in place of the communication control unit 211. Further, the communication control unit 211 and the control unit 230 may also be configured as a single block. The control unit 230 may alternatively be configured by a processor such as a CPU (Central Processing Unit) included in a computer.

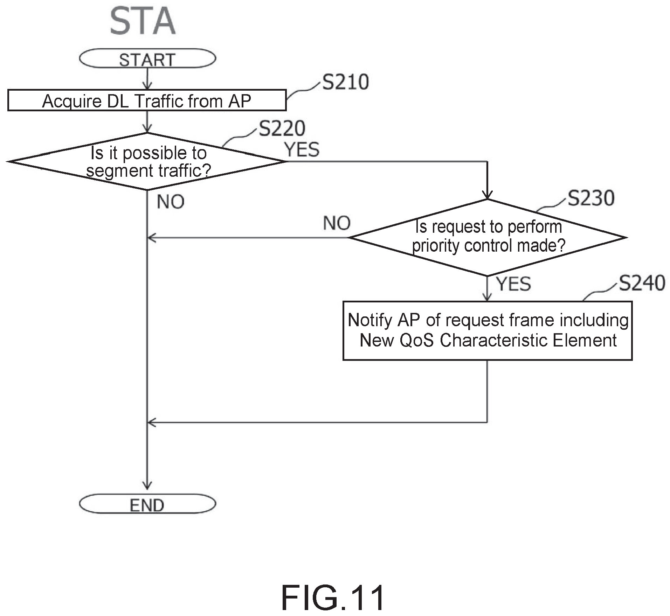

The control unit according to the present embodiment at least partially includes the functions of at least one of the communication control unit 211 or the control unit 230. The control unit performs control to receive a first traffic flow in which multiple types of data are arranged in a first order via the communication unit, the first traffic flow being transmitted from the AP (wireless communication device) 100, and to transmit a traffic parameter related to the first order, that is specified on the basis of the received first traffic flow, to the AP 100 via the communication unit. At this time, the control unit analyzes the first traffic flow, identifies each data type (I/P/B frame), and specifies a data group (I/P/B frame group) constituting a cycle regarding the arrangement order of the data types and a position of the data to become a target of the priority control (i.e., a position in the first order) in the data group. The traffic parameter includes a parameter related to priority control of at least one type of data out of the multiple types of data, and a target type of data is identified by a position of data in the first order and a cycle of arrival of the data. Details of control by the control unit will be described later in the sequence (see Fig. 14) and operation flow (see Fig. 11) of the present disclosure.

The storage unit 240 retains information to be used by the control unit 230 and the wireless communication unit 210. The storage unit 240 may also perform some of the operations of the communication storage unit 212 in place of the communication storage unit 212. The storage unit 240 and the communication storage unit 212 may be configured as a single block.

### (Configuration of rendering server 300)

The rendering server 300 generates data compressed according to MPEG for an image or video to be displayed by an application (e.g., VR application) used by the STA 200 implemented as the HMD, and transmits the data to the STA 200 via the AP 100. As the MPEG frame structure, MPEG uses a compression system called a GOP (Group of Frame) structure that uses an I frame, a P frame, and a B frame (will be referred to as I/P/B frames). Hereinafter, the GoP structure will be described.

### (Regarding GoP (Group of Frame) structure)

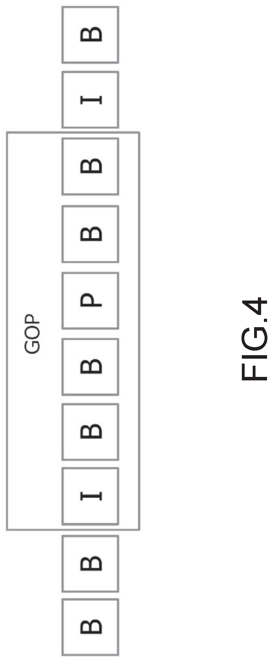

Fig. 4 shows an example of the GOP structure. The GOP structure is a concept of a group of frames in MPEG and refers to a group constituted of a plurality of consecutive frames (I picture, P picture, and B picture) constituting MPEG. The role of each picture is as follows.
· I frame: A completely independent frame that does not reference other frames, and only data of this frame can be reproduced.
· P frame: A frame in which only a difference that has changed from a previous frame (may be an immediately preceding frame or a frame even earlier than that) is recorded as data.
· B frame: A frame in which only differences of changes from the previous frame and the following frame are recorded as data. The "previous frame and the following frame" may be frames immediately before and after that frame, or may be a frame even earlier than the frame immediately before that frame and a frame even later than the frame immediately after that frame.

Generally, the I frame has a largest data amount, while the P and B frames (hereinafter, will be referred to as P/B frames) have smaller data amounts. Therefore, when generating frame data from continuous MPEG images, lowering a frequency of the I frame and raising a frequency of the P/B frames leads to a reduction of an overall transmission amount and a reduction of required transmission resources. Meanwhile, the P/B frames are not restored to original image information by themselves, and the I frame that is the reference source is always essential. Therefore, if the frequency of the I frame is lowered, there is a possibility that a picture will not be updated at a time when a packet loss occurs. This may result in lowering of the experiential value of the user. Generally, determination of the generation frequency of the I frame and P/B frames and/or the reference source of the P/B frames is up to the rendering device (corresponding to the rendering server 300 shown in Fig. 1). If the priority control that takes these I/P/B frames into account is performed during wireless transmission so that, for example, control of transmitting at least the I frame with the highest priority for sure is performed, it can be expected to provide high experiential value to the user.

However, the AP 100 normally only functions as a relay device that transmits various frames (I/P/B frames) received from the rendering server 300 to the STA 200, and is unable to identify the types of the various frames received. To enable the AP 100 to identify the frame types, a modification of an upper layer standard or an implementation that enables a frame type identification in the MAC layer of the AP 100 and/or the like becomes necessary. Currently, without the special implementation as that described above, there is no technique for reflecting the priority set in the application layer in the MAC layer of the wireless LAN.

In this regard, the present disclosure proposes a technique in which a traffic including various frames (I/P/B frames) is segmented to be separated into individual frames (will be referred to as segmented traffic) on the STA 200 side equipped with the application, and a result of the segmentation (e.g., the cycle of the I/P/B frames, the positions of the I/P/B frames in the traffic, etc.) is fed back to the AP 100, to enable the AP 100 to set priority control for the frames regardless of the frame types.

Hereinafter, a basic embodiment of the present disclosure will be described, followed by utilization examples of this priority control. Application examples to priority control other than the GoP structure will be described last.

### (Basic embodiment)

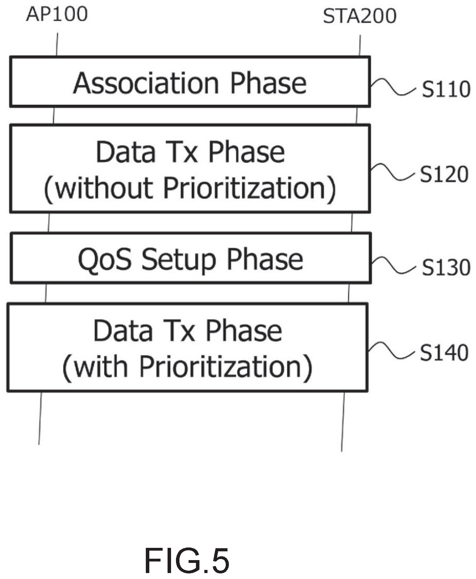

Fig. 5 shows a sequence of the overall operations performed between the AP 100 and the STA 100. This sequence includes Association Phase S110, Data Tx Phase (without Prioritization) S120, QoS Setup Phase S130, and Data Tx Phase (with Prioritization) S140.

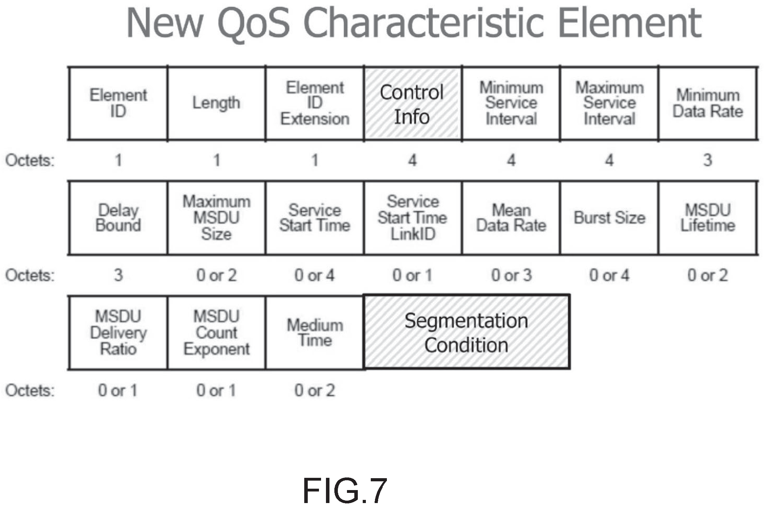

In Association Phase S110, authentication processing and connection processing are performed between the AP 100 and the STA 200. In this phase, capability information related to whether a function of "SCS (Stream Classification Service) Traffic Description" according to the present disclosure is supported is exchanged between the AP 100 and the STA 200. This function or an equivalent function may be introduced mandatorily or optionally in IEEE 802.11bn or subsequent IEEE 802.11 standards as the next-generation IEEE 802.11 standards. Details of this function will be described later with reference to Fig. 7.

In Data Tx Phase (without Prioritization) S120, data is transmitted between the AP 100 and the STA 200 without priority control. A flow of data to be transmitted is also called traffic. The data to be transmitted is mainly assumed to be the I/P/B frames that the AP 100 acquires from the rendering server 300. The STA 200 performs segmentation processing of the traffic received from the AP 100. The segmentation processing is, for example, processing of dividing the received traffic for each data or each data type to grasp what kind of timing or cycle which type of data arrives at.

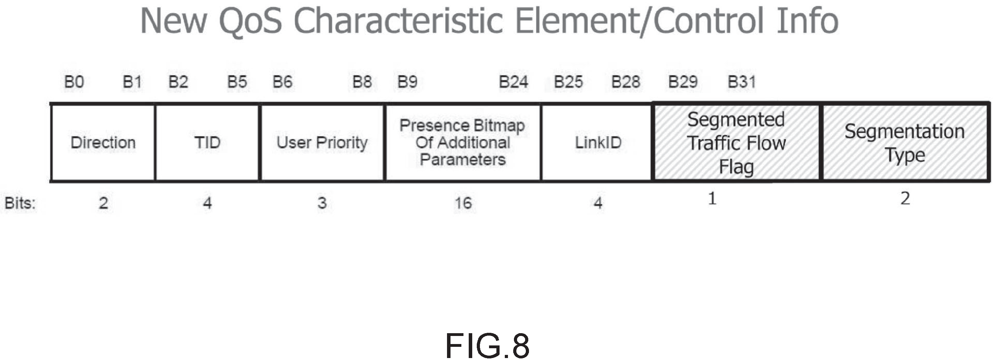

In QoS Setup Phase S130, "QoS Characteristic Element" according to the present disclosure is used to perform setting of traffic priority control between the AP 100 and the STA 200 on the basis of a result of the segmentation processing in Data Tx Phase S120. Details will be described later with reference to Fig. 8.

In Data Tx Phase (with Prioritization) S140, the AP 100 starts data transmission (transmission of the I/P/B frames) to the STA 200 on the basis of the setting of the priority control performed in QoS Setup Phase S130.

### (Configuration example of Capability Element used in Association Phase S110)

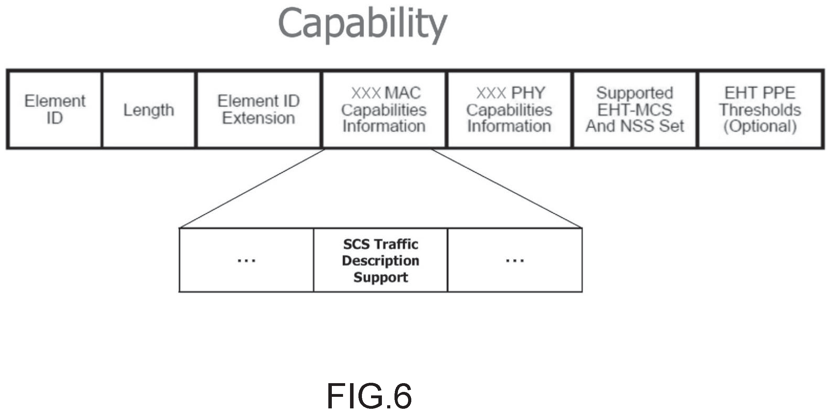

Fig. 6 shows a configuration example of Capability Element. This Element includes flag information regarding "SCS Traffic Description Support", which is a function according to the present disclosure, in MAC Capabilities Information of Capability Element. MAC Capabilities Information is a field used for each version of the standard in the IEEE 802.11 series (e.g., "HT", "HE", "EHT", etc.), and a version name of the supported standard is set in "xxx" in the figure. For example, the next-generation standard corresponding to IEEE 802.11bn is expected to be "UHR (Ultra High Reliability)". It is noted that PHY Capabilities Information is also a field used for each version of the standard in the IEEE 802.11 series (e.g., "HT", "HE", "EHT", etc.), and a version name of the supported standard is set in "xxx" in the figure.

### (Configuration example of QoS Characteristic Element used in QoS Setup Phase S130)

Fig. 7 shows a configuration example of QoS Characteristic Element.

Fig. 8 shows a configuration example of Control Info included in QoS Characteristic Element.

The configuration example shown in Fig. 7 is based on QoS Characteristic Element described in IEEE 802.11be D3.0. This Element includes a series of parameters (traffic parameters) for defining characteristics and QoS expectation values of a specific traffic flow, and is used to set parameters of functions such as SCS (Stream Classification Service) and R-TWT (Restricted Target Wake Time). The term "specific" used herein refers to a traffic generated within the same application, and conventionally refers to a traffic to which the same TID (Traffic Indication) or User Priority is assigned.

In the present disclosure, by newly adding "Segmented Traffic Flow Flag" and "Segmentation Type" in Control Info of this Element, it is possible to use some of the fields included in this Element as fields indicating the characteristics and QoS expectation values of segmented traffic flows (Segmented Traffic Flows) obtained from the traffic flow generated within the same application. As an example, when "Interval" is designated in Segmentation Type to be described later, some of the fields are all fields except for "Minimum Service Interval", "Maximum Service Interval", "Service Start Time", and "Medium Time". In addition, "Segmentation Condition" indicating a segmentation condition is included at the end of this Element. It is noted that the configuration example shown in Fig. 7 is a mere example, and at least information related to the above only needs to be included.

Element ID (and Element ID Extension) of this Element is information indicating that this Element is QoS Characteristic Element, and Length is information regarding a length of this Element.

As shown in Fig. 8, Control Info in this Element includes Direction indicating either UL (Uplink) or DL (Downlink), TID (Traffic Indicator), User Priority, Link ID, and bitmap information indicating which value of subsequent parameters is being stored ("Presence Bitmap Of Additional Parameters" in the figure). In the present disclosure, Control Info includes two new fields of Segmented Traffic Flow Flag and Segmentation Type.

Segmented Traffic Flow Flag is flag information indicating whether some of the fields indicated by this Element indicate parameters related to the characteristics and QoS expectation values of "segmented traffic flows" that are traffic flows segmented from a traffic flow generated by the same application. As described above, for example, some of the fields are all fields except for "Minimum Service Interval", "Maximum Service Interval", "Service Start Time", and "Medium Time".

In the case of "0", this Element includes characteristics and QoS expectation values of a traffic flow specified by the Direction/TID/User Priority values, as in the conventional case.

In the case of "1", this Element includes characteristics and QoS expectation values of a segmented traffic flow segmented according to "Segmentation Condition" to be described later, from the traffic flow specified by the Direction/TID/User Priority values, as in the conventional case.

Segmentation Type includes information related to the segmentation condition of the "segmented traffic flow". In the present embodiment, it is assumed that "Interval" is designated as the segmentation condition in Segmentation Type.

In descriptions below, the "traffic flow" refers to a conventional traffic flow that is not segmented if Segmented Traffic Flow Flag is "0", and refers to a segmented traffic flow if Segmented Traffic Flow Flag is "1". In other words, when Segmented Traffic Flow Flag is "1", some of the subsequent fields include values related to the characteristics and QoS expectation values of the segmented traffic flow.

Minimum Service Interval indicates a minimum interval between start times of two consecutive Service Periods (SP) allocated to the frame transmission when setting TWT (Target Wake Time) or R-TWT (Restricted Target Wake Time).

Maximum Service Interval indicates a maximum interval between the start times of the two consecutive Service Periods (SP) allocated to the frame transmission when setting TWT or R-TWT.

As the two numerical values described above, numerical values that take into account fluctuations of the frame generation interval (e.g., 11.1 ms in the case of 90 fps) are mainly designated.

Minimum Data Rate indicates a minimum data rate value of the input/output to MAC (the input/output between the control unit and the data processing unit in Fig. 2) in the transmission of MSDU (MAC Service Data Unit)/A-MSDU belonging to this traffic flow. MSDU/A-MSDU refers to one or both of MSDU and A-MSDU.

Delay Bound represents an allowable time required for MSDU belonging to this traffic flow (or first MSDU constituting A-MSDU) to be transmitted or retransmitted to a transmission destination device since being input to the MAC layer (data processing unit shown in Fig. 2) of the transmission side device.

Maximum MSDU Size represents maximum size information regarding MSDU/A-MSDU belonging to this traffic flow.

Service Start Time represents prediction time information until a packet exchange corresponding to TID designated in this Element starts. Service Start Time is a value indicated from the STA to the AP.

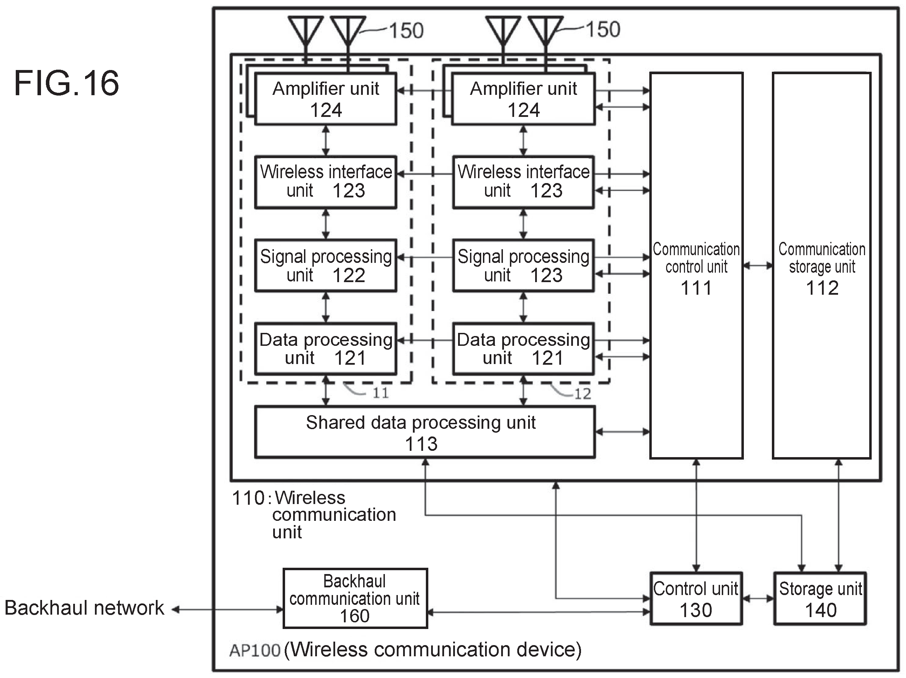

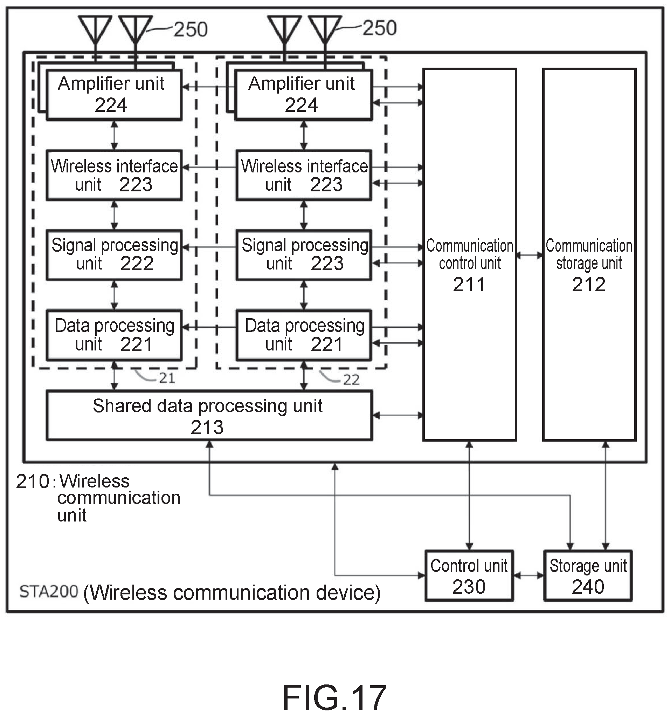

Service Start Time Link ID is identification information regarding a link where this traffic flow starts (in the case of multi-link described above; see Figs. 16 and 17 to be described later for multi-link device configurations).

Mean Data Rate represents a mean data rate value of the input/output to/from the MAC (the input/output between the control unit and the data processing unit in Fig. 2) in the transmission of MSDU/A-MSDU belonging to this traffic flow.

Burst Size represents maximum burst information (total data size) of MSDU/A-MSDU belonging to the traffic flow output from the MAC layer of the transmission destination device within a time designated in Delay Bound.

MSDU Life Time represents a time required for MSDU/A-MSDU belonging to this traffic flow to become useless in the reception side device (i.e., no longer needs to be transmitted to the reception side device) since being input to the MAC layer of the transmission side device. MSDU or A-MSDU whose save time in the transmission side device exceeds this time may be discarded by the transmission side device.

MSDU Delivery Ratio and MSDU Count Exponent are reliability information required for MSDU belonging to this traffic flow, and are used together with Delay Bound.

Medium Time represents time information requested as a mean medium time required by the STA for each second.

Segmentation Condition is information indicating a segmentation condition of this traffic.

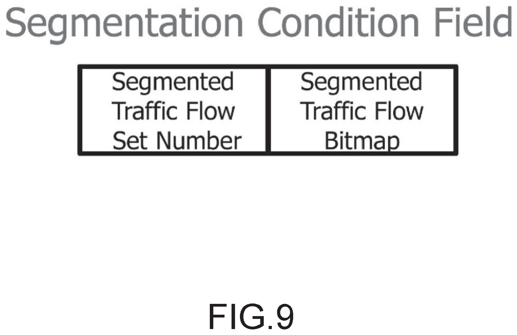

Fig. 9 shows a format example of Segmentation Condition Field. Segmentation Condition Field includes "Segmented Traffic Flow Set Number" and "Segmented Traffic Flow Bitmap".

Segmented Traffic Flow Set Number is information representing the number of "Segmented Traffic Flows" (corresponding to the number of pieces of data, the number of I/P/B frames, or the number of segmented traffics) included in the segmented traffic flow for one cycle, when the segmented traffic flow has periodicity.

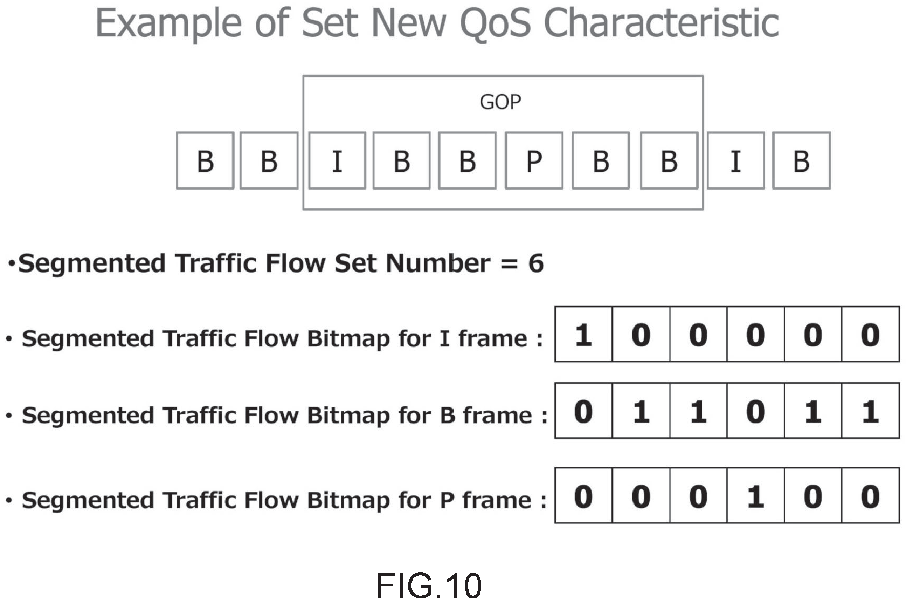

Fig. 10 shows a specific example of values of Segmented Traffic Flow Set Number and Segmented Traffic Flow Bitmap. In the case of the example shown in Fig. 10, Segmented Traffic Flow Set Number indicates "6" (it is noted that the generation period of each of the I/P/B frames shown in Fig. 10 is specified by "Minimum Service Interval" or "Maximum Service Interval"). Since Segmented Traffic Flow Set Number is "6", the number of segmented traffics (data or I/P/B frames) included in the segmented traffic flow for one cycle is six.

Segmented Traffic Flow Bitmap is bitmap information indicating a timing at which the segmented traffic flow indicated by this Element is generated when this traffic is segmented.

In the case of the example shown in Fig. 10, using 6-bit bitmap information, the generation timing of an I frame is indicated as "100000", the generation timing of a B frame is indicated as "011011", and the generation timing of a P frame is indicated as "000100". The position of "1" corresponds to the generation timing of the corresponding type of frame. Therefore, the first I frame that arrives for each cycle (i.e., a traffic of the I frame that arrives every six frames) corresponds to the segmented traffic flow of the I frame. Further, the second, third, fifth, and sixth B frames that arrive for each cycle correspond to the segmented traffic flow of the B frame. The fourth P frame that arrives for each cycle corresponds to the segmented traffic flow of the P frame. The four B frames, that is, the second, third, fifth, and sixth B frames that arrive for each cycle, may be collectively handled as a single segmented traffic flow of the B frame, or the second, third, fifth, and sixth B frames that arrive for each cycle may be handled as separate (independent) segmented traffic flows.

Fig. 11 is a flowchart of an example of operations of the STA 200.

The STA 200 first acquires a downlink traffic (series of data) received from the AP 100 during Data Tx Phase (without Prioritization) S120 (S210), and attempts to segment a traffic flow (S220). Here, the traffic flow segmentation processing may be performed by the communication control unit 211, or an analysis and segmentation may be performed by the control unit 230 (e.g., application layer), and results thereof may be fed back to the communication control unit 211. When the segmentation is performed by the communication control unit 211, machine learning or an AI technology may be used as the segmentation method, for example. The use of the machine learning or AI technology in the application layer is also possible.

When the STA 200 has succeeded in the segmentation of the traffic flow (YES in S220) and requests the AP 100 to perform priority control of a part of the segmented traffic flow (e.g., I frame) (YES in S230), the STA 200 transmits a request frame including New QoS Characteristic Element to the AP 100 (S240). When failing in the segmentation of the traffic flow (S220) or when priority control is not requested (NO in S230), this processing ends.

Fig. 12 is a flowchart of an example of operations of the AP 100.

Upon receiving a request frame including New QoS Characteristic Element from the STA 200 (S210), the AP 100 determines whether to perform priority control with respect to the requested segmented traffic flow (S220). Here, as the determination criteria, for example, when the AP 100 is communicating with another STA, the traffic priority or media usage status of the another STA may be used. For example, when the AP 100 is performing transmission of a traffic having a higher priority than that of the request from the STA 200 with another STA, the AP 100 may reject the priority control requested by the STA 200. When determining not to perform the priority control (NO in S220), the AP 100 transmits a rejection frame to the STA 200 (S240). The AP 100 may incorporate a request to re-propose another priority control method into the rejection frame.

When determining to perform the priority control (YES in S220), the AP 100 transmits an acknowledgement frame to the STA 200 and performs data transmission with priority control from next Data Tx Phase (Data Tx Phase (with Prioritization) in Fig. 5) (S230).

In this manner, by segmenting the traffic flow of the same application in the STA 200 and notifying the AP 100 of information related to the priority of the segmented traffic flow using QoS Characteristic Element, it is possible to make a setting to transmit only a specific segmented traffic flow (the segmented traffic flow of the I frame in the present embodiment) between the AP 100 and the STA 200 with a high priority. This makes it possible to perform QoS control as in [1] to [3] described below. This QoS control may be performed in response to a request from the STA 200, or may be performed autonomously by the AP 100.

### [1] WMM (Wireless Multimedia)

The AP 100 allocates an access category of a high priority (AC_VO etc.) to a segmented traffic flow (corresponding to the I frame) of a highest priority, to prioritize a channel access of the segmented traffic of the high priority. As a result, it is possible to suppress a transmission delay of the segmented traffic flow of the highest priority, and raise the possibility of the STA 200 receiving the segmented traffic flow of the highest priority for sure.

### [2] TID-to-Link Mapping

The AP 100 allocates different TIDs to the segmented traffic flow (corresponding to the I frame) of the highest priority and other segmented traffic flows (corresponding to B/P frames), to perform allocation and transmission with respect to links respectively corresponding to the TIDs during multi-link transmission. For example, a first TID is allocated to the segmented traffic flow of the highest priority, and a second TID having a lower priority than the first TID is allocated to the other segmented traffic flows. The frame of the first TID allocated to the segmented traffic flow of the highest priority is transmitted using a first link having high communication quality (high priority), and the frame of the second TID allocated to the other segmented traffic flows is transmitted using a second link having lower communication quality (lower priority) than the first link. The transmission using the first link and the transmission using the second link may be performed at the same time or in parallel. As a result, it is possible to raise the possibility of the STA 200 correctly receiving the segmented traffic flow of the highest priority for sure while efficiently using the frequency.

### [3] R (Restricted)-TWT

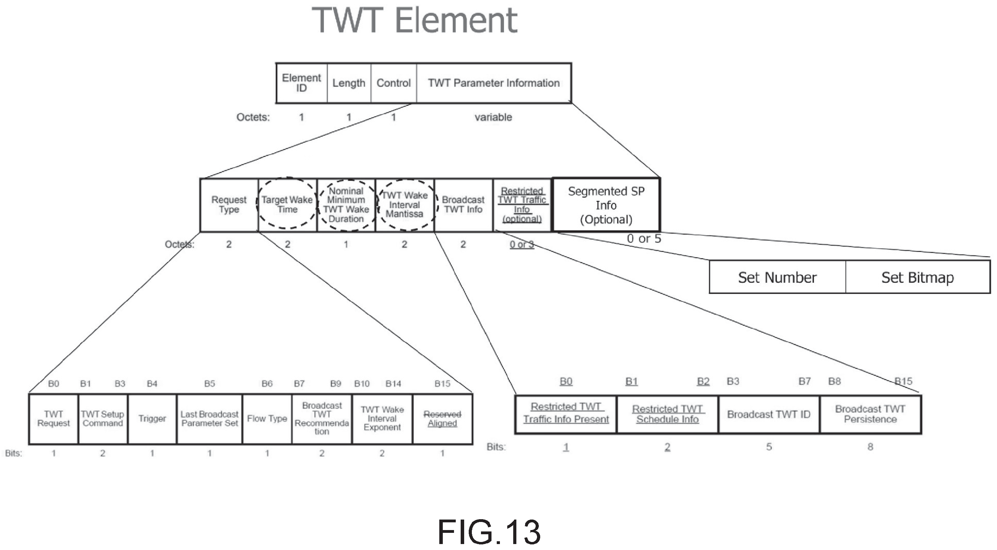

The AP 100 allocates different TIDs to the segmented traffic flow (corresponding to the I frame) of the highest priority and other segmented traffic flows (corresponding to B/P frames), and sets R-TWT SP in only the traffic flow of a high priority when setting R-TWT. Alternatively, R-TWT SP can be allocated to all of the segmented traffic flows. In this case, (when there is no Legacy STA) Segmentation Condition of QoS Characteristic Element can be used to flexibly set a duration of R-TWT SP. Hereinafter, details will be described using Figs. 13 (Error! Reference source not found) and 14.

Fig. 13 shows a configuration example of TWT Element according to the present disclosure. The AP 100 uses TWT Element when performing priority control using R-TWT described in [3] above. Here, TWT Element is based on TWT Element described in IEEE 802.11be D3.0, and it is assumed that "Segmented SP Info" is newly incorporated for transmission (whether Segmented SP Info is included in this Element can be grasped by checking a "Broadcast TWT ID" filed in Broadcast TWT Info; details will be described later).

Hereinafter, fields that are particularly relevant to the present disclosure in the format of TWT Element shown in Fig. 13 will be described.
· Target Wake Interval Exponent of Request Type: Exponent information used to calculate an interval between successive R-TWT SPs.
· Target Wake Time: Time information used to set a period up to the start of first R-TWT SP. This value is used only when a head bit (most significant bit) of subsequent Set Bitmap is "1" (e.g., when, in a case where a traffic is segmented into a plurality of segmented traffics and a segmented traffic group (I/P/B frame group) having a certain cycle is specified, a head frame of the I/P/B frame group constituting that cycle is the target).
· Nominal Minimum TWT Wake Duration: Time information used to set a period of R-TWT SP, and information related to a period length (Duration) of R-TWT SP.
· TWT Wake Interval Mantissa: Base information used to calculate an interval between successive R-TWT SPs.
· Broadcast TWT ID of Broadcast TWT Info: Identifier information regarding this TWT processing. If a most significant bit out of five bits of this identification information (Broadcast TWT ID) is "1", it means that Segmented SP Info is included.
· Set Number of Segmented SP Info: Cycle information when this traffic is segmented (e.g., the number of I/P/B frames included in one cycle).

Set Bitmap of Segmented SP Info: Bitmap information indicating a timing at which R-TWT SP indicated by relevant TWT Element is generated when this traffic is segmented (e.g., which frame out of the I/P/B frames included in one cycle is to be set as a target of the R-TWT SP setting).

Fig. 14 shows an example of an R-TWT execution sequence according to the present disclosure. Shown herein is an example in which, while R-TWT SP is allocated to all of the I/P/B frames as targets of the priority control, SP allocated to the I frame having a large data size amount has a longer period than SP allocated to the B/P frames.

The AP 100 negotiates with the STA 200 and transmits a Beacon frame including TWT Element (S410). At this time, TWT Element includes at least two elements: TWT Element for an I frame and TWT Element for B/P frames. The only differences between those two Elements are values of Set Bitmap of Segmented SP Info and Nominal Minimum TWT Wake Duration, and the values of other fields are in common. Although two TWT Elements are used in this example, new Element may be defined so that the setting of R-TWT SP for the I frame and R-TWT SP for the B/P frames is performed in this one Element.

After that, the AP 100 and the STA 200 extract Target Wake Time from TWT Element (in this example, TWT Element for the I frame) whose head bit (most significant bit) in Set Bitmap of Segmented SP Info is "1", and after Target Wake Time from a transmission time of the Beacon frame (S420), set first R-TWT SP (S430), to thus perform scheduling control. At this time, the value of TWT Element (in this example, TWT Element for the I frame) whose head bit in Set Bitmap of Segmented SP Info is "1" is used as "Nominal Minimum Wake Duration" indicating a period of R-TWT SP (S450). Upon receiving the data (I frame) from the rendering server 300 (S440), the AP 100 transmits this data within first R-TWT SP set in Step S430 (S460). It is noted that the AP 100 does not need to recognize that the data to be transmitted is the I frame, and only needs to perform the operation of transmitting the data received from the rendering server 300 at a time position (timing) corresponding to the head bit of Set Bitmap of "1", within first R-TWT SP set in Step S430.

Next, the AP 100 and the STA 200 set next R-TWT SP with respect to a time after an elapse of a period of TWT Wake Interval since the start time of first R-TWT SP (S470, S480), and perform scheduling control. At this time, the value of TWT Element (in this example, TWT Element for the P/B frames) whose second bit in Set Bitmap of Segmented SP Info is "1" is used as "Nominal Minimum Wake Duration" indicating the period of R-TWT SP (S500). Upon receiving the data (the B frame or the P frame; the B frame in the example shown in Fig. 10) from the rendering server 300 (S490), the AP 100 transmits this data within R-TWT SP set in Step S480 (S510). It is noted that the AP 100 does not need to recognize that the data to be transmitted is the B/P frames, and only needs to perform the operation of transmitting the data received from the rendering server 300 at a time position (timing) corresponding to the second bit of Set Bitmap of "1", within R-TWT SP set in Step S480.

By setting R-TWT SP in link with Set Bitmap of Segmented SP Info in this manner, it becomes possible to set R-TWT SP of an appropriate period with respect to each frame when frames of different data sizes or priorities like the I/P/B frames arrive periodically from the rendering server 300. After setting R-TWT SP only by the number indicated by Set Number of Segmented SP Info, the value of "Nominal Minimum Wake Duration" in TWT Element whose head in Set Bitmap of Segmented SP Info is "1" is used again, to set R-TWT SP (second "first R-TWT SP"). In this manner, the AP 100 can set R-TWT SP of an appropriate period that corresponds to each type even when not knowing the type of frame (I/P/B) arriving from the rendering server 300.

In the example shown in Fig. 14, two types of R-TWT SP, that is, R-TWT SP for the I frame and R-TWT SP for the B/P frames are set, but it is also possible to perform control of setting only R-TWT SP for the I frame without setting R-TWT SP for the B/P frames. In this case, only TWT Element indicating the I frame is stored in the Beacon frame, and R-TWT SP is not set with respect to portions other than a portion where the bit in Set Bitmap of Segmented SP Info is "1" (i.e., portions where the bits are "0"). As a result, the scheduling control is skipped for the B/P frames, and the B/P frames are transmitted by a normal WLAN operation (e.g., transmitted using access right gained by CSMA/CA).

It is noted that although the I/P/B frames are basically generated in a predetermined pattern on the basis of a certain cycle in the GoP structure described above, there is also a good possibility that the periodicity or order of the GoP structure (e.g., the number of I frames increases due to a poor communication environment, etc.) will change on the basis of the determination on the application side (rendering server 300 or STA 200). In that case, the STA 200 may retransmit New QoS Characteristic Element shown in Fig. 7 to the AP 100 to update the traffic flow segmentation condition. At this time, when there are no changes in the characteristics or QoS expectation values of the traffic flow themselves, it is possible to transmit only the information that has changed due to the update and skip the transmission of other information. In this case, only the field of the information that has changed can be incorporated, and the fields of other information can be omitted. Which field is to be incorporated is designated by Presence Bitmap of Additional Parameters in Control Info.

### [Application example]

The embodiment described above has described the example in which the GoP structure is assumed, and segmentation and QoS control of the traffic of the I/P/B frames created for each frame rate are performed. Examples of structures other than the GoP structure are shown below.

Depending on the application, information with different priorities (e.g., control information, Base Layer at a time of compression using an intraframe prediction, central visual field information when using Foveated Rendering, etc.) may be incorporated in the same compression frame and transmitted. In this case, the priority control as that described above can be performed by dividing the traffic in such a manner that a high priority is set for the first few bytes of the traffic flow constituting the frame and a low priority is set for the rest, or the like. An example of Segmentation Condition Field that enables such processing will be described below.

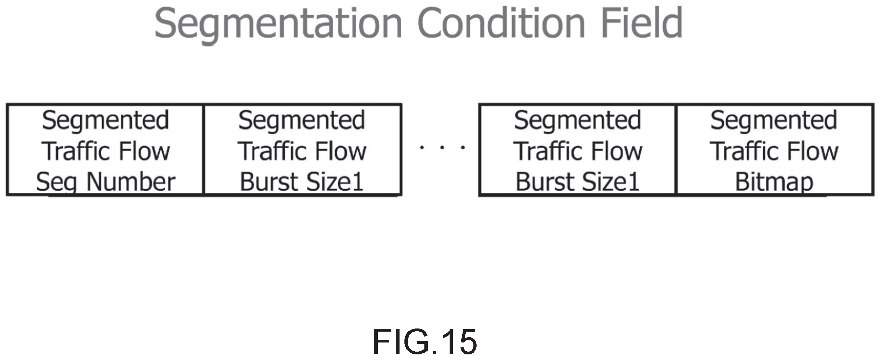

Fig. 15 shows another example of Segmentation Condition Field according to the present disclosure. It is noted that the field shown in Fig. 15 may be used independently of the field shown in Fig. 9, or may be added as it is to the field shown in Fig. 9.

Segmented Traffic Flow Segmentation Number: The number of segmentations of the traffic flow transmitted to the STA at each interval (cycle).

Segmented Traffic Flow Burst Size #n: Burst size information regarding an n-th segmented traffic flow (total data size of the n-th segmented traffic per cycle) in the traffic flow transmitted at each interval.

Segmented Traffic Flow Bitmap: Bitmap information for identifying the segmented traffic flow indicated by the characteristics and QoS expectation values indicated by this Element in the traffic flow transmitted at each interval.

### (Effects of present disclosure)

While only the priority control associated with the application type has been possible in the WLAN device of the related art (e.g., access point), the present disclosure enables segmentation of a data traffic within the same application and priority control of the segmented traffic. For example, in applications that require high volume and low latency, such as VR/AR/XR, it is possible to segment a traffic with the GoP structure into traffics for each I/P/B frame, specify an I/P/B frame group constituting one cycle, and raise the priority of the I frame for each cycle, to preferentially transmit the I frame for each cycle. As a result, the AP can reliably deliver the I frames that need to be delivered to the STA to the reception terminal even under a situation where the AP does not know the type of frame arriving from the rendering server 300 or the wireless environment is unstable, and thus it becomes possible to prevent service quality from being lowered.

Furthermore, the present disclosure is not limited to the GoP structure and is also effective in the case of minimally transmitting only one of a plurality of pieces of video information having different resolutions. For example, it is only necessary to segment a traffic including a plurality of pieces of video information into video information for each resolution on the STA side, set a priority for each of the segmented traffics (for each resolution), and raise the priority of the video information having a resolution that is wished to be transmitted at a minimum. Alternatively, the priority may be set only for the video information having a resolution that is wished to be transmitted at a minimum. In this case, the priority control only needs to be performed to specify only the video information having a resolution that is wished to be transmitted at a minimum from the traffic as a segmented traffic, and to transmit the video information preferentially over other pieces of video information.

The present disclosure is also effective in a case where, for example, in a situation where control information and non-control information are mixed in a traffic transmitted from the same application, the priority control is wished to be performed for each type of information. For example, segmentation into the control information and the non-control information is performed on the STA side, and a priority is set for each of the segmented traffics. When wishing to preferentially transmit the control information, the priority control is performed by setting the priority of the control information to be higher than that of the non-control information. Alternatively, the priority setting may be performed only for the control information. In this case, the priority control only needs to be performed to specify only the control information from the traffic as a segmented traffic, and to transmit the control information preferentially over information other than the control information (non-control information).

### (Modified examples)

The embodiment described above has assumed the case where the AP 100 and the STA 200 each include only one set of the data processing unit, the signal processing unit, the wireless interface unit, the amplifier unit, and the antenna 150, to perform single link communication. As another example, as described in the embodiment above, the configuration in which this set is provided plurally so that the AP 100 and the STA 200 perform wireless communication that uses a plurality of links (Multi Link Operation: MLO) (multi-link configuration) is also possible. An AP having a multi-link configuration may be referred to as an MLD (Multi Link Device: ML) AP, and an STA having a multi-link configuration may be referred to as an MLD STA.

Fig. 16 is a block diagram of the AP 100 having the multi-link configuration. The wireless communication unit 110 of the AP 100 shown in Fig. 16 includes a plurality of sets of the data processing unit 121, the signal processing unit 122, the wireless interface unit 123, the amplifier unit 124, and the antenna 150, and each set will be referred to as an AP entity. In the example shown in the figure, an AP entity 11 and an AP entity 12 are provided. The AP entities 11 and 12 independently perform processing of the MAC layer and below, that is related to the AP, and establish separate links with the STA 200 to perform communication.

Fig. 17 is a block diagram of the STA 200 having the multi-link configuration. The wireless communication unit 210 of the STA 200 shown in Fig. 17 includes a plurality of sets of the data processing unit 221, the signal processing unit 222, the wireless interface unit 223, the amplifier unit 224, and the antenna 250, and each set will be referred to as an STA entity. In the example shown in the figure, an STA entity 21 and an STA entity 22 are provided.

The AP entity 11 of the AP 100 is connected to the STA entity 21 of the STA 200 via one of the plurality of links, and performs processing related to the link. The AP entity 12 of the AP 100 is connected to the STA entity 22 of the STA 200 via another one of the plurality of links, and performs processing related to the link. With such a configuration, the AP 100 and the STA 200 can perform communication using the plurality of links at the same time or in parallel.

The priority control can also be performed by differentiating the links used to transmit and receive information between the AP 100 and the STA 200 described in the embodiment above for each type of information. For example, when communication quality of a first link is higher than that of a second link, first data to be preferentially transmitted (e.g., I frames) may be transmitted via the first link, and second data (e.g., P/B frames) may be transmitted via the second link. At this time, transmission via the first link and the second link may be performed at the same time. Alternatively, the first data may be transmitted in parallel via both the first link and the second link (redundant transmission), and the second data may be transmitted via the second link (or the first link). The control unit of the AP 100 may measure the communication quality of the plurality of links, and determine the link having the highest communication quality as the first link and determine the link having lower communication quality than the first link as the second link. In this manner, control to preferentially transmit the I frames using the plurality of links becomes possible.

### <Configuration example of computer>

The series of processing described above can be executed by hardware or can be executed by software. When the series of processing is executed by software, a program configuring the software is installed in a computer incorporated into dedicated hardware, a general-purpose personal computer, or the like from a program recording medium.

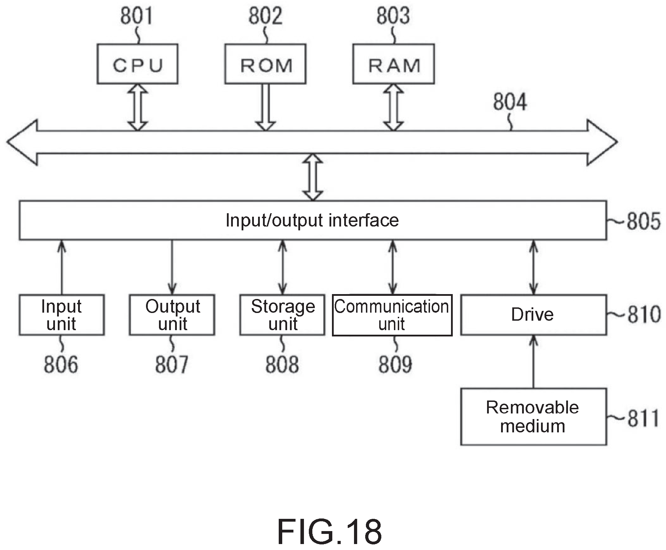

Fig. 18 is a block diagram showing a hardware configuration example of a computer that executes the series of processing described above by a program.

A CPU (Central Processing Unit) 801, a ROM (Read Only Memory) 802, and a RAM (Random Access Memory) 803 are mutually connected via a bus 804.

An input/output interface 805 is also connected to the bus 804. Connected to the input/output interface 805 are an input unit 806 constituted of a keyboard, a mouse, and the like, and an output unit 807 constituted of a display, a speaker, and the like. Also connected to the input/output interface 805 are a storage unit 808 constituted of a hard disk, a nonvolatile memory, and/or the like, a communication unit 809 constituted of a network interface and/or the like, and a drive 810 that drives a removable medium 811.

In the computer configured as described above, the CPU 801 loads a program stored in the storage unit 808 into the RAM 803 via the input/output interface 805 and the bus 804 and executes it, to carry out the series of processing described above, for example.

The program executed by the CPU 801 is recorded onto the removable medium 811 or provided via wired or wireless transmission media such as a local area network, the Internet, and digital broadcasting to be installed in the storage unit 808, for example.

It is noted that the program executed by the computer may be a program in which the processing is executed in time series in the order described in the present specification, or may be a program in which the processing is executed in parallel or at necessary timings, such as when invoked.

### <Application example>

The present technology can be applied to various products. For example, the base station (wireless communication device) 100 shown in Fig. 2 and the terminal device (wireless communication device) 200 shown in Fig. 3 may be realized as: a mobile terminal such as a smartphone, a tablet PC (Personal Computer), a laptop PC, a portable game terminal, or a digital camera; a fixed terminal such as a television receiver, a printer, a digital scanner, or a network storage; or an in-vehicle terminal such as a car navigation system. Alternatively, the base station (wireless communication device) 100 and the terminal device (wireless communication device) 200 may be realized as an M2M (Machine to Machine Communication) terminal such as a smart meter, a vending machine, a remote monitoring device, or a POS (Point of Sale) terminal. Furthermore, the base station (wireless communication device) 100 and the terminal device (wireless communication device) 200 may be a wireless communication module (e.g., an integrated circuit module constituted of a single die) mounted on these terminals.

On the other hand, for example, the base station (wireless communication device) 100 and the terminal device (wireless communication device) 200 may be realized as a wireless LAN AP (wireless base station) with or without a router function. Alternatively, the base station (wireless communication device) 100 and the terminal device (wireless communication device) 200 may be realized as a mobile wireless LAN router. Furthermore, the base station (wireless communication device) 100 and the terminal device (wireless communication device) 200 may be a wireless communication module (e.g., an integrated circuit module constituted of a single die) mounted on these devices.

### <Configuration example of smartphone>

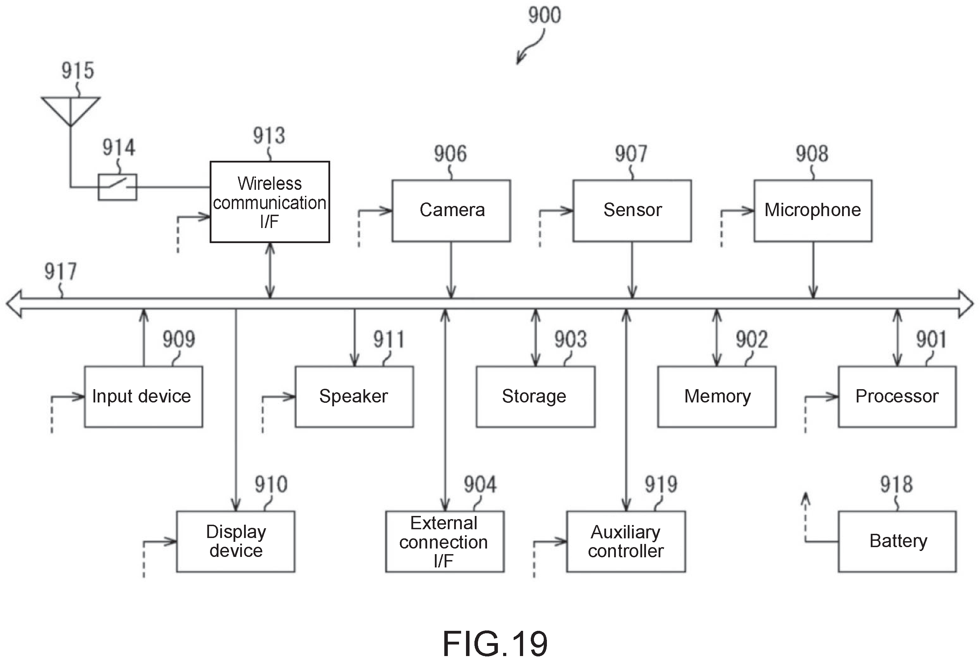

Fig. 19 is a block diagram showing a schematic configuration example of a smartphone to which the present technology is applied.

The smartphone 900 includes a processor 901, a memory 902, a storage 903, an external connection interface 904, a camera 906, a sensor 907, a microphone 908, an input device 909, and a display device 910. The smartphone 900 also includes a speaker 911, a wireless communication interface 913, an antenna switch 914, an antenna 915, a bus 917, a battery 918, and an auxiliary controller 919.

The processor 901 may be, for example, a CPU or a SoC (System on Chip), and restricts the functions of the application layer and other layers of the smartphone 900.

The memory 902 includes a RAM and a ROM and stores programs to be executed by the processor 901 and data.

The storage 903 includes a storage medium such as a semiconductor memory or a hard disk.

The external connection interface 904 is an interface for connecting an external device such as a memory card or a USB (Universal Serial Bus) device to the smartphone 900.

The camera 906 includes an image pickup element such as a CCD (Charge Coupled Device) or a CMOS (Complementary Metal Oxide Semiconductor), and generates a captured image.

The sensor 907 includes, for example, a sensor group including a positioning sensor, a gyro sensor, a geomagnetic sensor, an acceleration sensor, and the like.

The microphone 908 converts audio input to the smartphone 900 into an audio signal.

The input device 909 includes, for example, a touch sensor that detects a touch on a screen of the display device 910, a keypad, a keyboard, a button, a switch, or the like, and accepts operations or information input from the user.

The display device 910 includes a screen such as a liquid crystal display (LCD) or an organic light-emitting diode (OLED) display, and displays an output image of the smartphone 900. The speaker 911 converts an audio signal output from the smartphone 900 into audio.

The wireless communication interface 913 supports one or more wireless LAN standards such as IEEE802.11a, 11b, 11g, 11ac, 11ad, 11ax, 11ay, 11be, and 11bn, and executes wireless communication.

The wireless communication interface 913 communicates with other devices via the wireless LAN AP in an infrastructure mode. In addition, the wireless communication interface 913 directly communicates with other devices in an ad hoc mode or a direct communication mode such as Wi-Fi Direct.

It is noted that although one of the two terminals operates as an AP in Wi-Fi Direct unlike the ad hoc mode, communication is carried out directly between those terminals.

The wireless communication interface 913 typically includes a baseband processor, an RF (Radio Frequency) circuit, a power amplifier, and the like. The wireless communication interface 913 may be a one-chip module in which a memory that stores a communication control program, a processor that executes the program, and related circuits are integrated.

In addition to the wireless LAN system, the wireless communication interface 913 may support other types of wireless communication systems such as a near field communication system, a close-proximity wireless communication system, and a cellular communication system.

The antenna switch 914 switches a connection destination of the antenna 915 between circuits of a plurality of circuits (e.g., circuits for different wireless communication systems) included in the wireless communication interface 913.

The antenna 915 includes one antenna element or a plurality of antenna elements (e.g., a plurality of antenna elements constituting a MIMO (Multiple Input Multiple Output) antenna), and is used for transmission and reception of radio signals by the wireless communication interface 913.

It is noted that the smartphone 900 is not limited to the example shown in Fig. 19 and may include a plurality of antennas (e.g., an antenna for a wireless LAN and an antenna for a close-proximity wireless communication system). In that case, the antenna switch 914 may be omitted from the configuration of the smartphone 900.

The bus 917 connects the processor 901, the memory 902, the storage 903, the external connection interface 904, the camera 906, the sensor 907, the microphone 908, the input device 909, the display device 910, the speaker 911, the wireless communication interface 913, and the auxiliary controller 919 to one another.

The battery 918 supplies power to each block of the smartphone 900 shown in Fig. 19 via a power supply line partially indicated by a dashed line in the figure. The auxiliary controller 919 causes minimum necessary functions of the smartphone 900 to operate in a sleep mode, for example.

In the smartphone 900 shown in Fig. 19, for example, the wireless communication unit 110, the communication control unit 111, and the control unit 130 shown in Fig. 2 and the wireless communication unit 210, the communication control unit 211, and the control unit 230 shown in Fig. 3 may be implemented in the wireless communication interface 913. Furthermore, at least some of these functions may be implemented in the processor 901 or the auxiliary controller 919.

It is noted that the smartphone 900 may operate as a wireless AP (software AP) by the processor 901 executing an AP function at an application level. Further, the wireless communication interface 913 may have a wireless AP function.

Furthermore, the smartphone 900 may include a biometric authentication unit (fingerprint authentication, hand geometry authentication, voice authentication, blood vessel authentication, face authentication, iris authentication, retina authentication). In that case, the wireless communication interface 913 in which the wireless communication unit 110, the communication control unit 111, and the control unit 130 shown in Fig. 2 and the wireless communication unit 210, the communication control unit 211, and the control unit 230 shown in Fig. 3 are implemented is configured to receive supply of power from the same battery 918 as at least one of the display device 910, the speaker 911, or the biometric authentication unit.

Furthermore, in the smartphone 900, information is displayed by at least one of the display device 910 or the speaker 911 on the basis of communication with an external device by the wireless communication interface 913. At that time, information related to the present technology may be output from at least one of the display device 910 or the speaker 911, as the information.

### <Configuration example of in-vehicle device>

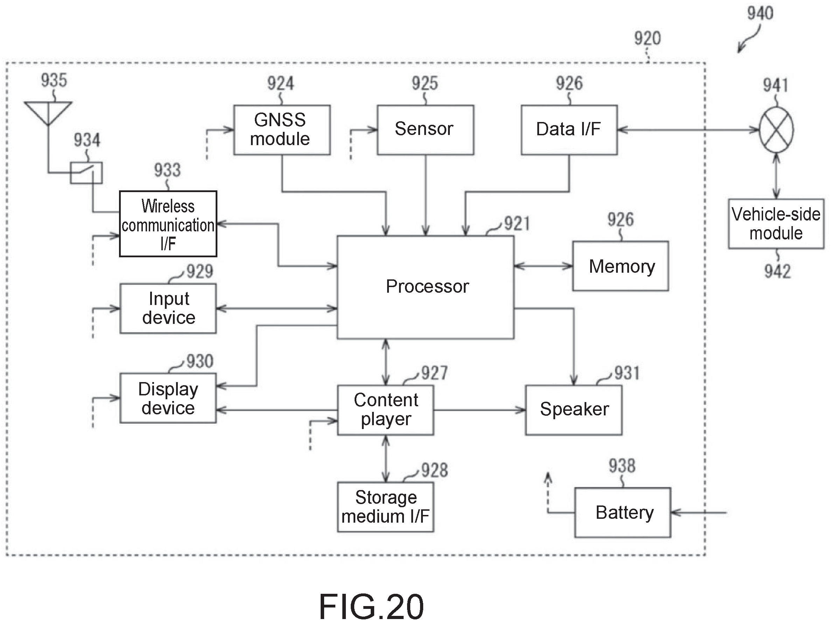

Fig. 20 is a block diagram showing a schematic configuration example of an in-vehicle device 920 to which the present technology is applied.

The in-vehicle device 920 is configured to include a processor 921, a memory 922, a GNSS (Global Navigation Satellite System) module 924, a sensor 925, a data interface 926, a content player 927, and a storage medium interface 928. The in-vehicle device 920 is also configured to include an input device 929, a display device 930, a speaker 931, a wireless communication interface 933, an antenna switch 934, an antenna 935, and a battery 938.

The processor 921 may be, for example, a CPU or a SoC, and controls a navigation function and other functions of the in-vehicle device 920. The processor 921 can also control a driving system of the vehicle, such as a brake, an accelerator, or steering, on the basis of information obtained through the communication that is based on the present technology.

The memory 922 includes a RAM and a ROM and stores programs to be executed by the processor 921 and data.

The GNSS module 924 measures a position (e.g., latitude, longitude, and altitude) of the in-vehicle device 920 using GNSS signals received from a GNSS satellite.

The sensor 925 includes, for example, a sensor group including a gyro sensor, a geomagnetic sensor, an air pressure sensor, and the like.

The data interface 926 is connected to an in-vehicle network 941 via a terminal (not shown), for example, and acquires data generated on the vehicle side, such as in-vehicle data.

The content player 927 reproduces content stored in a storage medium (e.g., a CD or a DVD) inserted into the storage medium interface 928.

The input device 929 includes, for example, a touch sensor that detects a touch on a screen of the display device 930, a button, a switch, or the like, and accepts operations or information input from the user.

The display device 930 includes a screen such as an LCD or an OLED display, and displays images of a navigation function or content to be reproduced.

The speaker 931 outputs audio of the navigation function or the content to be reproduced.

It is noted that the navigation function and/or the function of the content player 927 are optional in the in-vehicle device 920. The navigation function and/or the content player 927 may be removed from the configuration of the in-vehicle device 920.

The wireless communication interface 933 supports one or more wireless LAN standards such as IEEE802.11a, 11b, 11g, 11n, 11ac, 11ad, 11ax, 11ay, 11be, and 11bn, and executes wireless communication. The wireless communication interface 933 communicates with other devices via a wireless LAN AP in an infrastructure mode. The wireless communication interface 933 also communicates directly with other devices in an ad hoc mode or a direct communication mode such as Wi-Fi Direct.

The wireless communication interface 933 typically includes a baseband processor, an RF circuit, a power amplifier, and the like. The wireless communication interface 933 may be a one-chip module in which a memory that stores a communication control program, a processor that executes the program, and related circuits are integrated. In addition to the wireless LAN system, the wireless communication interface 933 may support other types of wireless communication systems such as a near field communication system, a close-proximity wireless communication system, and a cellular communication system.

The antenna switch 934 switches a connection destination of the antenna 935 between circuits of a plurality of circuits included in the wireless communication interface 933.

The antenna 935 includes one antenna element or a plurality of antenna elements and is used for transmission and reception of radio signals by the wireless communication interface 933.

It is noted that the in-vehicle device 920 is not limited to the example shown in Fig. 20 and may include a plurality of antennas 935. In that case, the antenna switch 934 may be omitted from the configuration of the in-vehicle device 920.

The battery 938 via a power supply line partially indicated by a dashed line in the figure. In the in-vehicle device 920 shown in Fig. 20, for example, the wireless communication unit 110, the communication control unit 111, and the control unit 130 shown in Fig. 2 and the wireless communication unit 210, the communication control unit 211, and the control unit 230 shown in Fig. 3 may be implemented in the wireless communication interface 933. Furthermore, at least some of these functions may be implemented in the processor 921.

Further, the wireless communication interface 933 may operate as the base station (wireless communication device) 100 or the terminal device (wireless communication device) 200 described above to provide a wireless connection to a terminal owned by the user in the vehicle.

Moreover, the present technology may be realized as an in-vehicle system (or vehicle) 940 including one or more blocks of the in-vehicle device 920 described above, an in-vehicle network 941, and a vehicle-side module 942. The vehicle-side module 942 generates vehicle-side data including a vehicle speed, an engine rotation speed, failure information, or the like, and outputs the generated data to the in-vehicle network 941.

### <Configuration example of wireless AP>

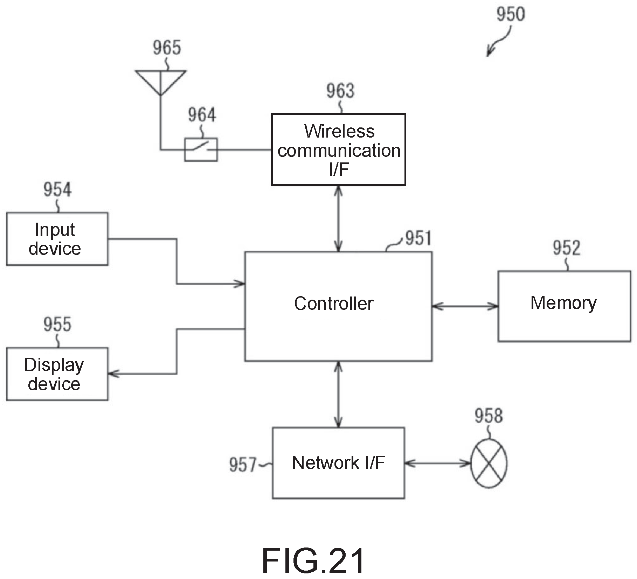

Fig. 21 is a block diagram showing a schematic configuration example of a wireless AP 950 to which the present technology is applied.

The wireless AP 950 includes a controller 951, a memory 952, an input device 954, a display device 955, a network interface 957, a wireless communication interface 963, an antenna switch 964, and an antenna 965.

The controller 951 may be, for example, a CPU or a DSP (Digital Signal processor), and causes various functions of an IP (Internet Protocol) layer and high-order layers of the wireless AP 950 (e.g., access restriction, routing, encryption, firewall, log management, and the like) to operate.

The memory 952 includes a RAM and a ROM, and stores programs to be executed by the controller 951 and various types of control information (e.g., a terminal list, a routing table, an encryption key, security settings, logs, and the like).

The input device 954 includes, for example, a button, a switch, and the like, and accepts operations from the user.

The display device 955 includes an LED lamp and/or the like and displays an operation status of the wireless AP 950.

The network interface 957 is a wired communication interface for connecting the wireless AP 950 to a wired communication network 958. The network interface 957 may include a plurality of connection terminals. The wired communication network 958 may be a LAN such as the Ethernet^{®}, or may be a WAN (Wide Area Network).

The wireless communication interface 963 supports one or more wireless LAN standards such as IEEE802.11a, 11b, 11g, 11n, 11ac, 11ad, 11ax, 11ay, and 11be, and provides a wireless connection as an AP to nearby terminals.

The wireless communication interface 963 typically includes a baseband processor, an RF circuit, a power amplifier, and the like.

The wireless communication interface 963 may be a one-chip module in which a memory that stores a communication control program, a processor that executes the program, and related circuits are integrated.

The antenna switch 964 switches a connection destination of the antenna 965 between circuits of a plurality of circuits included in the wireless communication interface 963. The antenna 965 includes one antenna element or a plurality of antenna elements and is used for transmission and reception of radio signals by the wireless communication interface 963.

In the wireless AP 950 shown in Fig. 21, for example, the wireless communication unit 110, the communication control unit 111, and the control unit 130 shown in Fig. 2 and the wireless communication unit 210, the communication control unit 211, and the control unit 230 shown in Fig. 3 may be implemented in the wireless communication interface 963. Furthermore, at least some of these functions may be implemented in the controller 951.

It is noted that the embodiment described above has shown the example of embodying the present technology, and the matters in the embodiment have a correspondence relationship with the matters specifying the invention in the scope of claims. Similarly, the matters specifying the invention in the scope of claims have a correspondence relationship with the matters in the embodiment of the present technology having the same names. However, the present technology is not limited to the embodiment and can be embodied by variously modifying the embodiment without departing from the gist of the present technology.

Furthermore, the processing procedures described in the embodiment above may be regarded as a method including a series of these procedures, or may be regarded as a program for causing this computer to execute the series of procedures or a recording medium that stores the program.

As this recording medium, for example, a CD (Compact Disc), an MD (MiniDisc), a DVD (Digital Versatile Disc), a memory card, a Blu-ray disc (Blu-ray^{®} Disc), or the like can be used.

It is noted that in the present specification, the system refers to an aggregation of a plurality of constituent elements (devices, modules (components), and the like), and whether all of the constituent elements are within the same housing is irrelevant. Therefore, a plurality of devices housed in separate housings and connected via a network and a single device in which a plurality of modules is housed in a single housing are both systems.

Moreover, the effects described in the present specification are mere examples and are not limited, and other effects may also be exerted.

The embodiment of the present technology is not limited to the embodiment described above, and can be variously modified without departing from the gist of the present technology.

For example, the present technology may take a configuration of cloud computing in which one function is shared to be cooperatively processed by a plurality of devices via a network.

Moreover, the respective steps described above in the flowcharts may be executed by a single device, or may be shared to be executed by a plurality of devices.

In addition, when a plurality of processing is included in a single step, the plurality of processing included in the single step may be executed by a single device, or may be shared to be executed by a plurality of devices.

The present embodiment can also take the following configurations.

### [Notes]

### [Item 1]

An information processing apparatus, including
a control unit that controls a communication unit that communicates with a wireless communication device, in which
the control unit performs control
   to receive, via the communication unit, a first traffic flow in which multiple types of data are arranged in a first order, the first traffic flow being transmitted from the wireless communication device, and
   to transmit, to the wireless communication device and via the communication unit, a traffic parameter that is related to the first order and specified on the basis of the received first traffic flow.

### [Item 2]

The information processing apparatus according to item 1, in which
the multiple types of data include a first type of data, and
the traffic parameter includes information for specifying a first position at which the first type of data is arranged in the first order.

### [Item 3]

The information processing apparatus according to item 2, in which
the traffic parameter includes cycle information indicating a cycle of the first type of data.

### [Item 4]

The information processing apparatus according to item 2 or 3, in which
the traffic parameter includes a request to preferentially transmit data at the first position.

### [Item 5]

The information processing apparatus according to any one of items 2 to 4, in which
the traffic parameter includes data size information regarding data at the first position.

### [Item 6]

The information processing apparatus according to any one of items 2 to 5, in which
the control unit receives, via the communication unit, a second traffic flow in which the multiple types of data are arranged in the first order, and
the control unit
   acquires, from the wireless communication device, information regarding a first schedule period that is set with respect to data at the first position in the second traffic flow in accordance with the traffic parameter, and
   performs control to receive the data at the first position in the second traffic flow in accordance with the first schedule period.

### [Item 7]

The information processing apparatus according to item 6, in which
the control unit receives, from the wireless communication device, data at a position different from the first position in the second traffic flow after an elapse of the first schedule period.

### [Item 8]

The information processing apparatus according to any one of items 1 to 7, in which
the multiple types of data include a second type of data,
the traffic parameter includes information for specifying a second position at which the second type of data is arranged in the first order, and
the traffic parameter includes information related to a first priority that is a priority of data at the first position, and information related to a second priority that is a priority of data at the second position, the second priority being lower than the first priority.

### [Item 9]

The information processing apparatus according to item 8, in which
the control unit
acquires information regarding a first schedule period and information regarding a second schedule period later than the first schedule period from the wireless communication device in accordance with the traffic parameter, the first schedule period being set with respect to the data at the first position, the second schedule period being set with respect to the data at the second position,
performs control to receive the data at the first position in accordance with the first schedule period, and
performs control to receive the data at the second position in accordance with the second schedule period.

### [Item 10]

The information processing apparatus according to item 8 or 9, in which
the traffic parameter includes data size information regarding the data at the first position and data size information regarding the data at the second position.

### [Item 11]

The information processing apparatus according to any one of items 8 to 10, in which
the information related to the first priority includes a first TID, and
the information related to the second priority includes a second TID having a lower priority than the first TID.

### [Item 12]

The information processing apparatus according to item 11, in which
the traffic parameter includes a request to
transmit the data of the first TID using one of a first link and a second link, and
transmit data of the second TID using another of the first link and the second link.

### [Item 13]

An information processing method, including:
receiving a first traffic flow in which multiple types of data are arranged in a first order, the first traffic flow being transmitted from a wireless communication device; and
transmitting, to the wireless communication device, a traffic parameter that is related to the first order and specified on the basis of the received first traffic flow.

### [Item 14]

A computer program for causing a computer to perform a process including:
performing control to receive a first traffic flow in which multiple types of data are arranged in a first order, the first traffic flow being transmitted from a wireless communication device; and
performing control to transmit, to the wireless communication device, a traffic parameter that is related to the first order and specified on the basis of the received first traffic flow.

### [Item 15]

An information processing apparatus, including
a control unit that controls a communication unit that communicates with a wireless communication device, in which
the control unit performs control
   to transmit, to the wireless communication device and via the communication unit, a first traffic flow in which multiple types of data are arranged in a first order,
   to receive a traffic parameter related to the first order from the wireless communication device via the communication unit, and
   to transmit, on the basis of the traffic parameter, a second traffic flow in which the multiple types of data are arranged in the first order.

### [Item 16]

The information processing apparatus according to item 15, in which
the multiple types of data include a first type of data,
the traffic parameter includes information for specifying a first position at which the first type of data is arranged in the first order, and
the control unit performs control to preferentially transmit data at the first position in the second traffic flow.

### [Item 17]

The information processing apparatus according to item 16, in which
the traffic parameter includes cycle information indicating a cycle of the first type of data.

### [Item 18]

The information processing apparatus according to item 16 or 17, in which
the traffic parameter includes data size information regarding the data at the first position.

### [Item 19]

The information processing apparatus according to any one of items 16 to 18, in which
the control unit
sets a first schedule period with respect to the data at the first position in the second traffic flow in accordance with the traffic parameter, and
performs control to transmit the data at the first position in the second traffic flow in accordance with the first schedule period.

### [Item 20]

The information processing apparatus according to item 19, in which
the control unit transmits, to the wireless communication device, data at a position different from the first position in the second traffic flow after an elapse of the first schedule period.

### [Item 21]

The information processing apparatus according to any one of items 16 to 20, in which
the multiple types of data include a second type of data,
the traffic parameter includes information for specifying a second position at which the second type of data is arranged in the first order,
the traffic parameter includes information related to a first priority that is a priority of the data at the first position, and information related to a second priority that is a priority of data at the second position, the second priority being lower than the first priority, and
the control unit transmits the data at the first position in the second traffic flow preferentially over the data at the second position on the basis of the information related to the first priority and the information related to the second priority.

### [Item 22]

The information processing apparatus according to item 21, in which
the control unit
sets the first schedule period with respect to the data at the first position in the second traffic flow in accordance with the traffic parameter,
sets a second schedule period with respect to the data at the second position in accordance with the traffic parameter, the second schedule period being later than the first schedule period, and
performs control
   to transmit the data at the first position in the second traffic flow in accordance with the first schedule period and
   to transmit the data at the second position in the second traffic flow in accordance with the second schedule period.

### [Item 23]

The information processing apparatus according to item 21 or 22, in which
the traffic parameter includes the data size information regarding the data at the first position and data size information regarding the data at the second position.

### [Item 24]

The information processing apparatus according to any one of items 21 to 23, in which
the information related to the first priority includes a first TID, and
the information related to the second priority includes a second TID having a lower priority than the first TID.

### [Item 25]

The information processing apparatus according to item 24, in which
the control unit performs control
to transmit the data of the first TID using one of a first link and a second link, and
to transmit data of the second TID using another of the first link and the second link.

### [Item 26]

The information processing apparatus according to item 24 or 25, in which
the control unit
allocates the data at the first position to a first access category on the basis of the first TID, and
allocates the data at the second position to a second access category on the basis of the second TID, the first access category having a shorter carrier sense time for gaining access right than the second access category.

### [Item 27]

An information processing method, including:
transmitting, to a wireless communication device, a first traffic flow in which multiple types of data are arranged in a first order;
receiving a traffic parameter related to the first order from the wireless communication device; and
transmitting, on the basis of the traffic parameter, a second traffic flow in which the multiple types of data are arranged in the first order.

### [Item 28]

A computer program for causing a computer to perform a process including:
transmitting, to a wireless communication device, a first traffic flow in which multiple types of data are arranged in a first order;
receiving a traffic parameter related to the first order from the wireless communication device; and
transmitting, on the basis of the traffic parameter, a second traffic flow in which the multiple types of data are arranged in the first order.

### Reference Signs List

- 11: AP entity
- 12: AP entity
- 21: STA entity
- 22: STA entity
- 100: AP device (base station, wireless communication device)
- 110: wireless communication unit
- 111: communication control unit
- 112: communication storage unit
- 121: data processing unit
- 122: signal processing unit
- 123: wireless interface unit
- 124: amplifier unit
- 130: control unit
- 140: storage unit
- 150: antenna
- 160: backhaul communication unit
- 200: STA device (wireless communication device, terminal device)
- 210: wireless communication unit
- 211: communication control unit
- 212: communication storage unit
- 221: data processing unit
- 222: signal processing unit
- 223: wireless interface unit
- 224: amplifier unit
- 230: control unit
- 240: storage unit
- 250: antenna
- 300: rendering server
- 804: bus
- 805: input/output interface
- 806: input unit
- 807: output unit
- 808: storage unit
- 809: communication unit
- 810: drive
- 811: removable medium
- 900: smartphone
- 901: processor
- 902: memory
- 903: storage
- 904: external connection interface
- 906: camera
- 907: sensor
- 908: microphone
- 909: input device
- 910: display device
- 911: speaker
- 913: wireless communication interface
- 914: antenna switch
- 915: antenna
- 917: bus
- 918: battery
- 919: auxiliary controller
- 920: in-vehicle device
- 921: processor
- 922: memory
- 924: GNSS module
- 925: sensor
- 926: data interface
- 927: content player
- 928: storage medium interface
- 929: input device
- 930: display device
- 931: speaker
- 933: wireless communication interface
- 934: antenna switch
- 935: antenna
- 938: battery
- 940: in-vehicle system (or vehicle)
- 941: in-vehicle network
- 942: vehicle-side module
- 951: controller
- 952: memory
- 954: input device
- 955: display device
- 957: network interface
- 958: wired communication network
- 963: wireless communication interface
- 964: antenna switch
- 965: antenna

## Claims

1. An information processing apparatus, comprising
a control unit that controls a communication unit that communicates with a wireless communication device, wherein
the control unit performs control
to receive, via the communication unit, a first traffic flow in which multiple types of data are arranged in a first order, the first traffic flow being transmitted from the wireless communication device, and
to transmit, to the wireless communication device and via the communication unit, a traffic parameter that is related to the first order and specified on a basis of the received first traffic flow.

2. The information processing apparatus according to claim 1, wherein
the multiple types of data include a first type of data, and
the traffic parameter includes information for specifying a first position at which the first type of data is arranged in the first order.

3. The information processing apparatus according to claim 2, wherein
the traffic parameter includes cycle information indicating a cycle of the first type of data.

4. The information processing apparatus according to claim 2, wherein
the traffic parameter includes a request to preferentially transmit data at the first position.

5. The information processing apparatus according to claim 2, wherein
the traffic parameter includes data size information regarding data at the first position.

6. The information processing apparatus according to claim 2, wherein
the control unit receives, via the communication unit, a second traffic flow in which the multiple types of data are arranged in the first order, and
the control unit
acquires, from the wireless communication device, information regarding a first schedule period that is set with respect to data at the first position in the second traffic flow in accordance with the traffic parameter, and
performs control to receive the data at the first position in the second traffic flow in accordance with the first schedule period.

7. The information processing apparatus according to claim 6, wherein
the control unit receives, from the wireless communication device, data at a position different from the first position in the second traffic flow after an elapse of the first schedule period.

8. The information processing apparatus according to claim 2, wherein
the multiple types of data include a second type of data,
the traffic parameter includes information for specifying a second position at which the second type of data is arranged in the first order, and
the traffic parameter includes information related to a first priority that is a priority of data at the first position, and information related to a second priority that is a priority of data at the second position, the second priority being lower than the first priority.

9. The information processing apparatus according to claim 8, wherein
the control unit
acquires information regarding a first schedule period and information regarding a second schedule period later than the first schedule period from the wireless communication device in accordance with the traffic parameter, the first schedule period being set with respect to the data at the first position, the second schedule period being set with respect to the data at the second position,
performs control to receive the data at the first position in accordance with the first schedule period, and
performs control to receive the data at the second position in accordance with the second schedule period.

10. The information processing apparatus according to claim 8, wherein
the traffic parameter includes data size information regarding the data at the first position and data size information regarding the data at the second position.

11. The information processing apparatus according to claim 8, wherein
the information related to the first priority includes a first TID, and
the information related to the second priority includes a second TID having a lower priority than the first TID.

12. The information processing apparatus according to claim 11, wherein
the traffic parameter includes a request to
transmit the data of the first TID using one of a first link and a second link, and
transmit data of the second TID using another of the first link and the second link.

13. An information processing method, comprising:
receiving a first traffic flow in which multiple types of data are arranged in a first order, the first traffic flow being transmitted from a wireless communication device; and
transmitting, to the wireless communication device, a traffic parameter that is related to the first order and specified on a basis of the received first traffic flow.

14. A computer program for causing a computer to perform a process comprising:
performing control to receive a first traffic flow in which multiple types of data are arranged in a first order, the first traffic flow being transmitted from a wireless communication device; and
performing control to transmit, to the wireless communication device, a traffic parameter that is related to the first order and specified on a basis of the received first traffic flow.
